**Europäisches Patentamt**

**European Patent Office**

**Office européen des brevets**

(11) Numéro de publication : **0 307 290 B1**

(12) **FASCICULE DE BREVET EUROPEEN**

(45) Date de publication du fascicule du brevet :
**06.05.92 Bulletin 92/19**

(21) Numéro de dépôt : **88402212.0**

(22) Date de dépôt : **02.09.88**

(51) Int. Cl.⁵ : **B29C 67/22,** A62B 17/00,
**D03D 15/12**

(54) **Procédé de fabrication d'une pièce de garnissage intégralement avec sa barrière anti-feu.**

(30) Priorité : **09.09.87 FR 8712494**
**14.09.87 FR 8712678**

(43) Date de publication de la demande :
**15.03.89 Bulletin 89/11**

(45) Mention de la délivrance du brevet :
**06.05.92 Bulletin 92/19**

(84) Etats contractants désignés :
**AT BE CH DE ES FR GB GR IT LI LU NL SE**

(56) Documents cités :
**FR-A- 2 391 334**
**FR-A- 2 578 189**
**GB-A- 2 179 067**

(56) Documents cités :
**GB-A- 2 179 068**
**US-A- 4 247 347**
**US-A- 4 283 457**
**US-A- 4 423 102**
**US-A- 4 455 340**
**US-A- 4 529 639**

(73) Titulaire : **HUTCHINSON**
**2 rue Balzac**
**F-75008 Paris (FR)**

(72) Inventeur : **Dubus, Michel-Raymond**
**41 rue de Conflans**
**F-95220 Herblay (FR)**

(74) Mandataire : **Orès, Bernard et al**
**Cabinet ORES 6, Avenue de Messine**
**F-75008 Paris (FR)**

## Description

La présente invention est relative à un procédé de fabrication de pièces de garnissage protégées contre le feu et destinées à des articles de confort, tels que des sièges pour véhicules de transport en commun et plus particulièrement pour avions, accoudoirs, appuis-tête, banquettes, bornes d'amortissement ou analogues, et aux articles équipés des pièces de garnissage ainsi obtenues.

Il est connu de pourvoir l'ossature des sièges de véhicules d'un garnissage amortisseur de chocs, dont la forme s'adapte à celle de l'ossature du siège et qui est constitué par des mousses comportant un revêtement externe en un tissu décoratif.

Il est, en outre, désormais classique d'utiliser à cet effet des mousses de polyuréthane qui sont, parmi les polymères amortisseurs de chocs existant dans le commerce, probablement les meilleurs matériaux du point de vue des propriétés mécaniques et du prix de revient.

Toutefois, étant donné que , malheureusement, les mousses de polyuréthane sont très sensibles à la température (parce que leurs groupes uréthane subissent facilement la pyrolyse et leurs liaisons aliphatiques sont thermiquement oxydables, la décomposition de ces mousses commence déjà à partir d'environ 250°C), il est de pratique courante de protéger contre le feu un garnissage en mousse de polyuréthane à l'aide d'une barrière anti-feu constituée par une doublure ou housse ignifuge, donc résistant au feu, interposée entre le garnissage et le revêtement décoratif.

Jusqu'à présent, on connaît les deux types de liaison suivants entre la couche anti-feu et le revêtement décoratif :

1. - liaison lâche ou flottante, sans adhérisation mutuelle, ce qui comporte, d'une part, la nécessité d'une confection supplémentaire pour l'habilleur du siège, qui doit effectuer la fixation séparée de la doublure ou housse anti-feu au garnissage et à l'ossature et ensuite la fixation du revêtement et, d'autre part, le déplacement relatif entre doublure et revêtement avec formation de plis inesthétiques ; de plus, la présence de coutures dans la doublure anti-feu est un autre aspect négatif de cette solution ;

2. - liaison intime à l'aide d'agents adhésifs (colles) qui, outre à diminuer la souplesse de l'ensemble, présentent des propriétés de résistance au feu qui laissent à désirer et qui compromettent sérieusement la fonction de protection de la doublure anti-feu.

Toutefois, même-si la solution 2 est préférable à la première, en ce qu'elle élimine les inconvénients précités dus à la liaison lâche de la doublure par rapport au revêtement décoratif, la deuxième solution présente les mêmes inconvénients de la première solution par rapport au garnissage.

Le Brevet FR-A-2 578 189 fait connaître un procédé de fabrication d'un coussin à garnissage intégré par coulée d'un mélange moussant directement dans une housse textile cousue du coussin. Cette housse est préalablement placée dans un moule et étanchéifiée par collage d'un film en caoutchouc ou en polyuréthane appliqué par tirage sous vide et avec création de zones de désolidarisation (c'est-à-dire sans colle) du film par rapport à la housse aux endroits où la mousse forme des plissures habituelles lorsque le coussin est sollicité.

Toutefois, ce procédé présente des inconvénients, notamment en ce que les opérations de couture et de collage sont fastidieuses et relativement longues, ce qui a inévitablement de l'incidence sur le coût du produit fini.

Le préambule de la revendication principale est basé sur ce document FR-A-2 578 189.

La présente invention s'est donné pour but de pourvoir à un procédé permettant d'obtenir une adhésion intime entre la doublure anti-feu et le garnissage, de façon que celui-ci et sa protection anti-feu se présentent comme une structure "monolithique", obtenue sans colle ni couture.

La présente invention a pour objet un procédé de fabrication d'une pièce de garnissage en une matière polymère moussante équipée d'une enveloppe étanche et destinée à tout article de confort, tel que siège, accoudoir, appui-tête, banquette ou borne d'amortissement, comportant les opérations de :

– revêtement des parois internes d'un moule à l'aide de l'enveloppe ;

– placage, par aspiration, de l'enveloppe tapissant les parois du moule contre ces parois ;

– injection directe de la matière polymère moussante, dont se compose le garnissage, à l'intérieur de l'enveloppe ainsi plaquée contre les parois du moule, lequel procédé est caractérisé en ce qu'il comprend également les étapes suivantes :

– réalisation préalable de l'enveloppe étanche, faisant barrière anti-feu et constituée de feuilles composites minces et déformables, par induction de la face interne d'un tissu élastique, présentant un haut degré de résistance à la flamme, à l'aide d'une composition en une matière polymère élastique, notamment élastomère, qui comporte une charge destinée à la rendre ignifuge et qui est compatible avec la matière polymère moussante ;

– extraction de la pièce de garnissage moulée et équipée de sa barrière anti-feu constituée par les feuilles composites précitées et exécution d'opérations de finition, telles que découpage des portions desdites feuilles composites dépassant les limites d'encombrement de ladite pièce et soudure de ces feuilles suivant le pourtour de la découpe.

En ce qui concerne la matière de garnissage utilisée dans le cadre de la présente invention, celle-ci est de préférence constituée par de la mousse de polyuréthane, dont l'expansion a lieu à l'intérieur du moule après l'opération d'injection précitée.

Le fait que la barrière anti-feu (à savoir, le tissu précité) soit réalisée intégralement avec la pièce de garnissage a l'avantage d'éliminer l'usure de la barrière due au déplacement relatif qui a lieu dans les réalisations de l'Art antérieur, et qui ne se manifeste pas avec les articles réalisés conformément à l'invention parce que la liaison intime entre barrière anti-feu et mousse de polyuréthane fait subir au tissu anti-feu enduit les mêmes déformations que celles du garnissage.

Selon un mode de réalisation avantageux du procédé conforme à l'invention, ledit tissu élastique est constitué à partir de fibres de polyaramide et de fibres pré-oxydées qui sont tissées ensemble, notamment par tricotage, de façon telle qu'elles confèrent au tissu une élasticité multidirectionnelle.

Selon un autre mode de réalisation avantageux du procédé conforme à l'invention, la pièce de garnissage protégée contre le feu ainsi obtenue comporte un revêtement décoratif qui, de préférence, est constitué par ledit tissu de protection à élasticité multidirectionnelle.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquel :

la figure 1 est une vue schématique illustrant le principe de fonctionnement du moule utilisé pour la mise en oeuvre du procédé selon l'invention ;
les figures 2 à 4 sont des vues, également schématiques, des différentes étapes de ce procédé ; et
la figure 5 est une vue, encore schématique, d'un article de confort (coussin) obtenu à l'aide du procédé conforme à l'invention.

Il doit être bien entendu, toutefois, que ces dessins et les parties descriptives correspondantes, sont donnés uniquement à titre d'illustration de l'objet de l'invention, dont ils ne constituent en aucune manière une limitation.

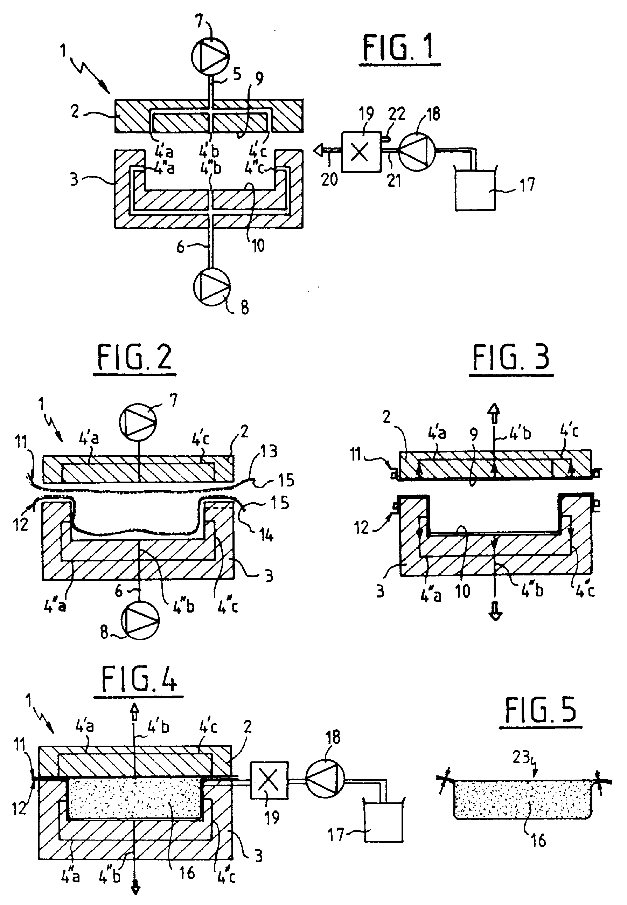

Le principe de fonctionnement d'un moule susceptible d'être utilisé dans le cadre de la présente invention peut être aisément compris en se référant à la figure 1, où on a représenté schématiquement un moule 1 en deux parties définies par les références numériques 2 et 3. Dans chaque partie du moule est ménagée une pluralité de canalisations, d'aspiration uniformément distribuées, telles que 4'a à 4'c et 4"a à 4"c, reliées à une canalisation principale, 5 et 6 respectivement, qui sont en communication avec une pompe d'aspiration, 7 et 8 respectivement.

Chacune de ces pompes, 7 et 8, est destinée à plaquer contre la face interne de la portion de moule correspondante, 2 et 3, une feuille, 11 et 12 (visible à la figure 2) par effet de l'aspiration produite par les pompes précitées (cf. aussi la figure 3).

Les feuilles 11 et 12 sont des feuilles composites minces, déformables et étanches dont chacune est obtenue préalablement à partir d'une feuille mince de tissu élastique anti-feu, 13 et 14 respectivement, qui est enduit sur une face - à savoir la face interne qui est destinée à venir en contact intime avec un garnissage, en se solidarisant à ce dernier - à l'aide d'une composition en une matière polymère élastique, de préférence un élastomère, qui est préalablement rendue ignifuge par incorporation d'une charge appropriée connue des techniciens en la matière et qui est étalée sur chaque feuille mince de tissu 13 et 14, sous forme d'une couche également mince 15.

Une fois que cette étape préliminaire de préparation des feuilles composites minces, déformables et étanches, 11 et 12 est terminée, il s'agit de :

– les positionner dans chacune des portions 2 et 3 du moule 1, comme illustré à la figure 2,
– les plaquer contre la face interne, 9 et 10, de la portion de moule correspondante, 2 et 3 respectivement, par activation des pompes d'aspiration 7 et 8 (cf. la figure 3),
– fermer le moule 1 en superposant la portion 2 sur la portion 3 de celui-ci, tout en maintenant l'aspiration produite par les pompes de manière que les feuilles composites 11 et 12 soient toujours intimement plaquées contre les faces internes 9 et 10 précitées (cf. la figure 4),
– injecter une matière polymère appropriée à l'intérieur du moule 1, ainsi préparé, pour recevoir cette dernière, à l'aide d'un dispositif d'injection (représenté schématiquement à la figure 1) : la matière polymère de garnissage d'élection est constituée par du polyuréthane (PU) qui est aspiré à l'état liquide à partir d'un bac 17 par une pompe 18 coopérant avec un dispositif de mélangeage 19 disposé en aval de la pompe 18, immédiatement avant la buse d'injection 20 (cf. aussi la figure 4) : le dispositif de mélangeage 19 présente deux entrées 21 et 22, dont la première pour le polyuréthane et la deuxième pour des additifs, notamment constitués par des accélérateurs, destinés à favoriser la réticulation du polyuréthane provenant du bac 17 ;
– extraire le produit moulé - après expansion du polyuréthane (cf. la référence numérique 16 à la figure 4), qui se lie tout naturellement aux feuilles composites 11 et 12 grâce à la compatibilité entre le polyuréthane et l'élastomère ignifugé enduit sur chaque feuille mince de tissu élastique 13 et 14 - tel que le coussin 23 représenté schématiquement à la figure 5, pour effectuer les nécessaires opérations de finition, telles que découpe des portions des feuilles composites dépassant les limites d'encombrement du produit moulé et soudure de ces feuilles suivant le pourtour de la découpe.

A l'aide du procédé selon l'invention, il est ainsi possible d'obtenir des articles de confort, tels que sièges, appuis-tête, accoudoirs, banquettes, bornes d'amortissement ou autres, dont le garnissage est réalisé intégralement (intimement lié) avec la barrière anti-feu constituée par la feuille composite précitée, dont le tissu élastique de support de l'enduit élastomère peut, de préférence, jouer aussi le rôle d'un revêtement décoratif, lui aussi donc intégré avec le garnissage.

Bien entendu, il est possible de pourvoir le produit obtenu à l'aide du procédé conforme à l'invention d'un revêtement décoratif séparé sans pour autant sortir du cadre de l'invention.

A titre d'exemple non limitatif, on indique ci-après des matériaux utilisables pour la mise en oeuvre du procédé selon l'invention :

– en ce qui concerne le tissu élastique déformable, celui-ci est avantageusement constitué par un tissu jersey "PANOTEX" composé de fibres "PANOX P 505" et d'aramide,

– en ce qui concerne la couche étanche de liaison destinée à être enduite sur une face dudit tissu déformable, celle-ci est avantageusement un mélange à base de polyuréthane ignifugé (les agents ignifugeants pouvant comprendre, entre autres, un composé halogène) ; l'épaisseur du film étanche est de préférence comprise entre 1 et 8/100 de mm, dont environ la moitié se retrouve -après absorption - sur la face enduite du tissu ;

– en ce qui concerne le polyuréthane cellulaire, celui-ci est un liquide bicomposant dont le polyol est formulé notamment avec un agent gonflant à basse température et des agents ignifugeants organo-métalliques.

La température de travail est comprise entre 30 et 40°C (de préférence, le moule est aussi légèrement chauffé).

La finition du produit obtenu à l'aide du procédé décrit plus haut concerne la découpe des bavures et notamment la soudure des deux tissus enduits 13 et 14 par fusion du polyuréthane d'enduction.

En variante, la barrière anti-feu est réalisée, conformément à l'invention, à l'aide d'un tissu présentant un haut degré de résistance à la flamme dont au moins une de ses faces est enduite, de façon étanche, d'une dissolution d'un mélange élastomère/silicone ignifugé. Ce tissu est, de préférence, constitué par un tissu de verre, notamment du type "STEVENS-GENIN T 235" dont le poids est d'environ 90 grammes par m². Après enduction et vulcanisation, le tissu de verre présente un poids d'environ 110 grammes par m². Le tissu ainsi enduit et le coussin en mousse de polyuréthane sont conformes à la norme ATS 1000.

Le tissu est sous forme de toile ou, de préférence, sous forme de jersey.

La présente invention permet donc de réaliser des barrières anti-feu qui sont très légères, tout en présentant un comportement au feu exceptionnel.

On peut également utiliser d'autres tissus présentant un haut degré de résistance à la flamme et, en particulier, un tissu de fibres préoxydées, notamment celui connu sous la marque de fabrique "FIROTEX".

**Revendications**

1. Procédé de fabrication d'une pièce degarnissage (16) en une matière polymère moussante équipée d'une enveloppe étanche et destinée à tout article de confort (23), tel que siège, accoudoir, appui-tête, banquette ou borne d'amortissement, comportant les opérations de :

– revêtement des parois internes (9,10) d'un moule (1) à l'aide de l'enveloppe ;

– placage, par aspiration, de l'enveloppe tapissant les parois (9,10) du moule (1) contre ces parois ;

– injection directe de la matière polymère moussante, dont se compose-le garnissage, à l'intérieur de l'enveloppe ainsi plaquée contre les parois du moule, lequel procédé est caractérisé en ce qu'il comprend également les étapes suivantes :

– réalisation préalable de l'enveloppe étanche, faisant barrière anti-feu et constituée de feuilles composites (11,12) minces et déformables, par induction de la face interne d'un tissu élastique (13,14), présentant un haut degré de résistance à la flamme, à l'aide d'une composition (15) en une matière polymère élastique, notamment élastomère, qui comporte une charge destinée à la rendre ignifuge et qui est compatible avec la matière polymère moussante ;

– extraction de la pièce de garnissage moulée et équipée de sa barrière anti-feu constituée par les feuilles composites précitées et exécution d'opérations de finition, telles que découpage des portions desdites feuilles composites dépassant les limites d'encombrement de ladite pièce et soudure de ces feuilles suivant le pourtour de la découpe.

2. Procédé selon la revendication 1, caractérisé en ce que ledit tissu élastique est constitué à partir de fibres de polyaramide et de fibres pré-oxydées qui sont tissées ensemble, notamment par tricotage, de façon telle qu'elles confèrent au tissu une élasticité multidirectionnelle.

3. Procédé selon l'une quelconque des revendications 1 ou 2, caractérisé en ce que la pièce de garnissage protégée contre le feu ainsi obtenue comporte un revêtement décoratif.

4. Procédé selon la revendication 3, caractérisé en ce que ledit revêtement décoratif est constitué par le tissu élastique lui-même présentant un haut degré de résistance à la flamme.

5. Procédé selon l'une des revendications précédentes, caractérisé en ce que le tissu élastique est enduit, sur sa face de contact avec le garnissage, d'une dissolution d'un mélange élastomère-silicone ignifugé.

6. Procédé selon la revendication 5, caractérisé en ce que le tissu élastique est un tissu de verre en forme de jersey.

## Patentansprüche

1. Verfahren zur Herstellung eines Ausstaffierungsteils (16) aus schäumendem Polymermaterial, das mit einer undurchlässigen Umhüllung versehen ist und für jeglichen Komfortartikel (23) bestimmt ist, wie einen Sessel, eine Armlehne, eine Kopfstütze, eine Bank oder einen Dämpfungsabweisen, mit den folgenden Schritten:
   – Auskleidung der Innenwände (9, 10) einer Form (1) mit Hilfe der Umhüllung;
   – die Anlegung durch Ansaugung der Umhüllung, die die Wände (9, 10) der Form (1) abdeckt, gegen diese Wände;
   – unmittelbare Einspritzung des schäumenden Polymermaterials, aus dem sich die Ausstaffierung zusammensetzt, in das Innere der Umhüllung, die so gegen die Wände der Form angepreßt wird,
   – wobei das Verfahren dadurch **gekennzeichnet** ist, daß es in gleicher Weise die nachfolgenden Abschnitte umfaßt:
      – vorherige Ausführung der dichten Umhüllung, so daß diese eine feuerfeste Sperre bildet und aus zusammengesetzten, dünnen und verformbaren Folien (11, 12) gebildet ist, durch Beschichten der Innenfläche eines elastischen Textilerzeugnisses (13, 14), das ein hohes Maß an Entflammungsbeständigkeit aufweist, mit Hilfe einer Zusammensetzung (15) an einem elastischen Polymermaterial, insbesondere einem Elastomer, das einen Zuschlag enthält, der dazu bestimmt ist, es feuerhemmend zu machen, und das mit dem schäumenden Polymermaterial kompatibel ist; und
      – Entnahme des geformten und mit seiner feuerhemmenden Barriere versehenen Ausstaffierungsteils, die durch die zusammengesetzten, oben genannten Folien gebildet ist, und Ausführung von Fertigstellungsarbeiten, wie den Zuschnitt der genannten zusammengesetzten Folienteile, die die Umgrenzungen der Abmessungen des genannten Stücks überschreiten, und Verschweißung dieser Folien längs des Umfangs des Zuschnitts.

2. Verfahren nach Anspruch 1, dadurch **gekennzeichnet**, daß das genannte elastische Textilerzeugnis aus Polyamidfasern und voroxidierten Fasern gebildet ist, die gemeinsam zu einem Textilerzeugnis, insbesondere durch Wirken, verarbeitet sind, auf eine solche Weise, daß sie dem Textilerzeugnis eine Mehrrichtungselastizität verleihen.

3. Verfahren nach jedem der Ansprüche 1 oder 2, dadurch **gekennzeichnet**, daß das auf diese Weise erhaltene, gegen Feuer geschützte Ausstaffierungsteil eine dekorative Verkleidung aufweist.

4. Verfahren nach Anspruch 3, dadurch **gekennzeichnet**, daß die genannte dekorative Verkleidung vom elastischen Textilerzeugnis selbst gebildet wird, das ein hohes Maß an Entflammungsbeständigkeit aufweist.

5. Verfahren nach einem der vorangehenden Ansprüche, dadurch **gekennzeichnet**, daß das elastische Textilerzeugnis auf seiner Fläche der Berührung mit der Ausstaffierung mit einer Lösung einer flammenhemmenden Elastomer-Silicon-Mischung überzogen wird.

6. Verfahren nach Anspruch 5, dadurch **gekennzeichnet**, daß das elastische Textilerzeugnis ein Jersey-artiges Glasgewebe ist.

## Claims

1. A method of producing a lining member (16) of afoaming polymer material provided with a sealing-tight casing and intended for any comfort article (23) such as a seat, armrest, headrest, bench seat or shock absorber, comprising the following operations:
   – covering the inside walls (9,10) with a mould (1) by means of the casing;
   – the use of vacuum to apply the casing lining the walls (9, 10) of the mould (1) flush against the said walls;
   – direct injection of the foaming polymer material used for providing the lining, on the inside of the casing which is thus applied flush against the walls of the mould, the said method being characterised in that it likewise comprises the following states:
      – prior provision of the sealing-tight casing forming a fire check barrier and constituted by thin and deformable composite sheets (11, 12) by induction of the inside surface of an elastic cloth (13, 14), offering a high degree of flame-resistance, by means of a composition (15) of a particularly elastomeric elastic polymer material, comprising a filling intended to render it fireproof and compatible with the foaming polymer material;

– extraction of the moulded lining member which is provided with its fire check 'carrier constituted by the aforesaid composite films and the performance of finishing operations such as the cutting of the portions of the said composite films which extend beyond the overall limits of the said member and welding of these sheets according to the cutting contours.

2. A method according to Claim 1, characterised in that the said elastic cloth is constituted by polyaramide fibres and pre-oxidised fibres which are woven together, particularly by a knitting process, so that they impart multi-directional elasticity to the woven fabric.

3. A method according to either of Claims 1 or 2, characterised in that the fire-proof lining member which is thus obtained comprises a decorative covering.

4. A method according to Claim 3, characterised in that the said decorative covering is constituted by the flexible fabric which itself offers a high degree of flame-resistance.

5. A method according to one of the preceding Claims, characterised in that the elastic cloth is, on its face which is in contact with the lining, coated with a dissolution of a fire-proofed silicone-elastomer mixture.

6. A method according to Claim 5, characterised in that the elastic cloth is a jersey-type glass cloth.

FIG. 1

FIG. 2

FIG. 3

FIG.4

FIG. 5